# EUROPÄISCHE PATENTSCHRIFT

(11) **EP 0 564 907 B1**
(45) Veröffentlichungstag und Bekanntmachung des Hinweises auf die Patenterteilung: **28.05.1997**
(21) Anmeldenummer: 93104847.4
(22) Anmeldetag: 24.03.1993
(51) Int. Cl.: G01N 35/02

(54) **Analysenvorrichtung**
Analyser
Appareil d'analyse

(30) Priorität: 06.04.1992 EP 92105903
(43) Veröffentlichungstag der Anmeldung: 13.10.1993
(73) Patentinhaber: F. HOFFMANN-LA ROCHE AG, 4002 Basel (CH)
(72) Erfinder: Bühler, Jürg, CH-6023 Rothenburg (CH); Greter, Andreas, CH-6312 Steinhausen (CH)
(74) Vertreter: Buntz, Gerhard

(56) Entgegenhaltungen:
- EP-A- 0 099 103
- WO-A-92/05448
- US-A- 3 115 966
- US-A- 3 322 958
- US-A- 3 432 049
- US-A- 3 644 095
- US-A- 4 785 407

## Beschreibung

Die Erfindung betrifft eine Vorrichtung zur Durchführung von chemischen und biochemischen Analysen mit einem Transportrotor zum Transport von Probenküvetten, die am äusseren Rand des Rotors angeordnet sind, zu Bearbeitungsstationen, die zur Vornahme der für die Analysen erforderlichen Behandlungsschritte in definierten Positionen um den Rotor herum angeordnet sind, einer ersten Station für die Probendosierung, einer zweiten Station für die Reagenziendosierung, einer dritten Station für die Vornahme einer Fluoreszenzpolarimetrischen oder Absorptions-Messung, und ggf. weiterer Stationen.

Automatische Analysenvorrichtungen arbeiten in der Regel nach dem Prinzip, dass die Analysenproben oder Teilmengen davon in Probenbehälter verbracht, anschliessend einer Reihe von Bearbeitungsschritten wie Zufügen (Pipettieren) von Reagenzien, Mischen, Inkubieren etc. unterworfen und dass entweder mehrmals während der Bearbeitung und/oder einmal am Ende der Bearbeitung Messungen der erfolgten Reaktionen vorgenommen werden. Dabei erfolgt der Ablauf üblicherweise entweder so, dass die Probenbehälter mit den Analysenproben in fester Reihenfolge auf einem Transportmittel angeordnet werden und verschiedene Bearbeitungsstationen durchlaufen oder dass bei der sog. Batch-Bearbeitung, wie sie bei den sog. Zentrifugalanalysengeräten üblich ist, alle auf einem Träger (Rotor) angeordneten Probenbehälter quasi gleichzeitig den Bearbeitungsschritten und den Messungen unterworfen werden. Nach diesen Prinzipien arbeitende Analysensysteme leisten gute Dienste in grossen Kliniken und Analysenzentren, in denen grosse Probenzahlen verarbeitet werden müssen.

Eine Vorrichtung zur photometrischen Analyse von Proben ist in US-A-3 322 958 beschrieben und enthält einen Drehtisch für den Transport von Probenbehältern zu einem unterhalb des Drehtisches angeordneten Photometer. Die Probenbehälter werden zur Messung in ihrer Position im Drehtisch soweit verschoben, dass sich ihr unteres Ende in die Messzone des Photometers erstreckt. Nach erfolgter Messung werden die Probenbehälter wieder auf ihr ursprüngliches Niveau auf dem Drehtisch angehoben.

Eine Vorrichtung zur Blutanalyse ist in EP-A-99 103 beschrieben und enthält vor allem eine Rühr- bzw. Mischeinrichtung, in der die einzelnen Probenbehälter einer Bewegung unterworfen werden, die einen Mischeffekt bewirkt. Die Zuführung der Proben zur eigentlichen Testeinrichtung 50 erfolgt durch Entnahme, d.h. Absaugen der Probe aus dem Probenbehälter.

Eine andere Vorrichtung mit einem Transportrotor zum Transport von Küvetten zu einzelnen um den Rotor herum angeordneten Bearbeitungsstationen ist in US-A-4,785,407 beschrieben. Die auf dem Rotor angeordneten Küvetten werden sequentiell zu den Bearbeitungsstationen geführt. Bei den Stationen bleiben die Küvetten während der Bearbeitung auf dem Rotor.

Eine Vorrichtung mit Transportketten zum Küvettentransport ist in US-A-3,644,095 beschrieben. Auch dieses Transportsystem arbeitet sequentiell. Zur Vornahme der wesentlichen Bearbeitungsschritte Proben- und Reagenziendosierung und Messung bleiben die Küvetten auf den Transportketten, oder die Probenmischung wird aus den Küvetten entnommen. Zur Ermöglichung einer grösseren Verweildauer werden die Küvetten von den Transportketten entnommen und temporär auf einen als eine Art Warteschleife dienenden Rotor gesetzt.

Es hat sich aber angesichts der heutigen Vielfalt der möglichen Analysen und der medizinischen Anforderungen, vor allem im Bereich der klinischen Chemie herausgestellt, dass die bisher üblichen für den sequentiellen Durchsatz grosser Probenmengen geeigneten Analysenautomaten zu wenig flexibel sind, um auf einzelne Patienten bzw. Krankheitsbilder spezifisch zugeschnittene Analysenprofile (Fall Random Access) zu erstellen und trotzdem eine grosse Zahl von Patientenproben zu bewältigen.

Der Erfindung liegt daher die Aufgabe zugrunde, ein Analysensystem bereitzustellen, das diesen Anforderungen Rechnung trägt, indem eine grosse Zahl von Analysenproben mit grösster Flexibilität bezüglich des an der einzelnen Probe durchgeführten Analysenprofils verarbeitet werden können.

Erfindungsgemäss wird dies dadurch erreicht, dass bei den Stationen Entnahmemittel zur Entfernung der Küvetten vom Rotor, zur Verbringung der Küvetten in die Bearbeitungsstationen und zum Zurücksetzen der Küvetten nach einer Bearbeitung auf den Transportrotor vorhanden sind und dass der Transportrotor mit einem Antrieb zur Drehung um genaue Winkelschritte in beide Drehrichtungen versehen ist.

Im folgenden wird anhand der beiliegenden Zeichnungen ein Ausführungsbeispiel der Erfindung beschrieben.

Es zeigen:
- Fig. 1: eine axonometrische Gesamtdarstellung einer Analysen vorrichtung
- Fig. 2: eine Draufsicht auf die Vorrichtung gemäss Pfeil I in Fig. 1

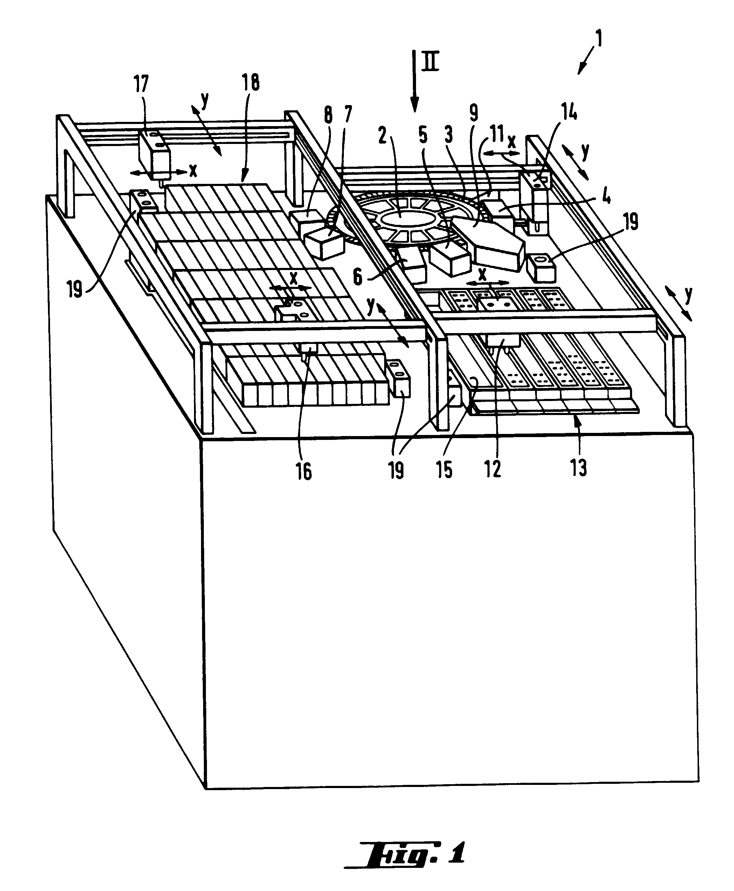

Wie aus Fig. 1 ersichtlich besitzt die Vorrichtung 1 einen geschlossenen Unterbau 10, auf dessen Oberseite eine Anzahl von funktionellen Einrichtungen angeordnet ist. Im Unterbau befinden sich alle Einrichtungen, die mit den eigentlichen Analysenvorgängen nur indirekt zu tun haben, wie beispielsweise Stromversorgung, Elektronik, Küvettenver- und entsorgung, Kühleinrichtungen etc.

Auf der Oberseite befindet sich ein erster Bereich 18, in dem alle Reagenzien zur Pipettierung zur Verfügung gehalten werden, ein zweiter Bereich 13 für die Aufstellung der Probenbehälter, aus denen die Proben in die Messküvetten pipettiert werden, und ein dritter Bereich, welcher der eigentliche Analysenbereich ist.

Oberhalb des ersten Bereiches 18 sind Transporteinrichtungen 16, 17, die je eine oder vorzugsweise zwei Pipettiernadel zu gewünschten Pipettierpositionen führen, um die Pipettierung bestimmter Mengen von Reagenzien zu ermöglichen, die im ersten Bereich gehalten werden.

Oberhalb des zweiten Bereiches 13 sind Transporteinrichtungen 12, 14, die je eine oder vorzugsweise zwei Pipettiernadel zu gewünschten Pipettierpositionen führen, um die Pipettierung bestimmter Mengen von Proben aus Probenbehälter zu ermöglichen, die im ersten Bereich gehalten werden.

Der zweite Bereich kann zusätzlich einen Fach 15 zur Aufnahme von Komponenten für speziellen Tests enthalten, z.B. für Tests bei denen sogenannte ionselektive Elektroden verwendet werden.

Neben dem ersten Bereich 18 und dem zweiten Bereich 13 ist je eine Waschposition 19 vorgesehen, in der die Pipettiernadel zwischen Pipettierungen gereinigt wird.

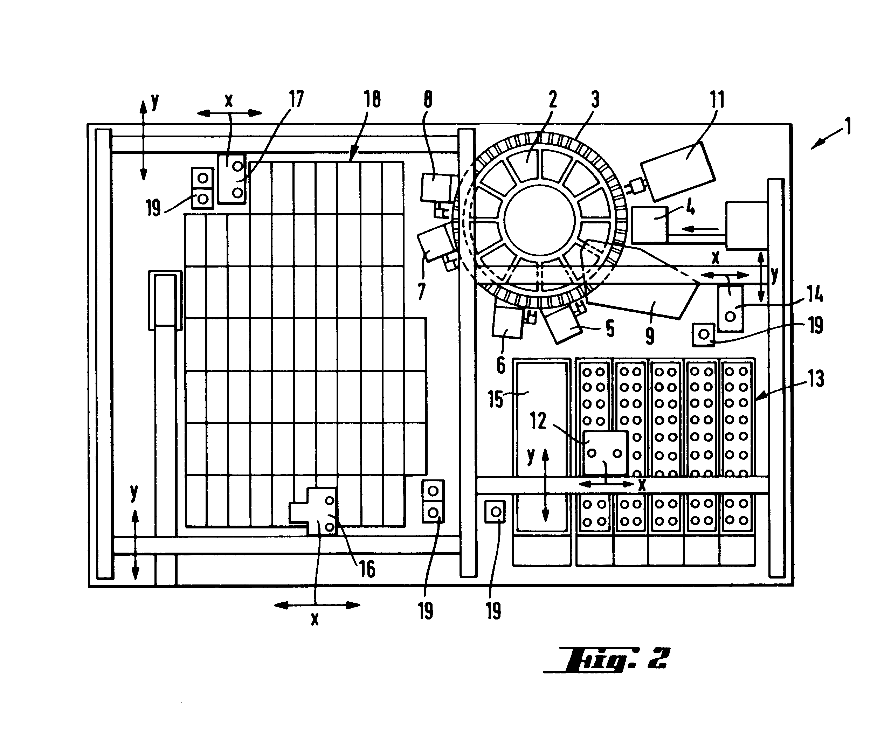

In dem Analysenbereich sind eine Vorrichtung 2 für den Küvettentransport, sowie eine Anzahl von Bearbeitungsstationen für die in den Küvetten enthaltenen Proben angeordnet. Dieser Analysenbereich ist in Fig. 2 in Draufsicht gezeigt. Er enthält die nachstehend beschriebenen Komponenten.

Als Küvettentransportvorrichtung 2 dient ein kreisförmiger, durch einen (nicht gezeigten) Antrieb um genaue Winkelschritte in beiden Drehrichtungen drehbarer Rotor. Die Messküvetten werden am äusseren Rand 3 des Rotors gehalten, indem sie einerseits mit einem an ihrer Oberseite vorhandenen Flansch auf einer ebenen, zur Rotorachse senkrechten Ringfläche aufliegen und gleichzeitig mit einer ihrer Wandflächen an der im wesentlichen zylindrischen Aussenfläche des Rotors anliegen, sowie andererseits durch jeder Küvettenposition zugeordnete, radial über die Küvette ragende federnde Zungen gehalten werden, die zu diesem Zweck auf ihrer Unterseite einen, in eine im Küvettenflansch angeordnete Vertiefung eingreifenden Vorsprung (nicht gezeigt) aufweisen. Durch die federnde Halterung werden die Küvetten so fest gehalten, dass sie auch bei Rotordrehung nicht von selbst herausfallen können. Andererseits erlaubt es die federnde Halterung, die Küvetten manuell oder durch einen mechanischen Greifmechanismus einfach abzunehmen oder aufzustecken.

Eine detaillierte Beschreibung des Rotors 2 und seiner Funktion ist aus der europäischen Patentanmeldung Nr. 92.105902 mit dem Titel "Transporteinrichtung für eine Analysenvorrichtung" ersichtlich. Auf diese Beschreibung wird hiermit Bezug genommen.

Der Rotor führt die Küvetten an einem Photometer 9 zur Durchführung von Absorptionsmessungen vorbei. Die Küvetten durchlaufen den Lichtstrahl des Photometers.

In genau definierten Positionen relativ zum Rotor sind Bearbeitungsstationen angeordnet. Diese Bearbeitungsstationen sind mit Mitteln zur Entnahme von Küvetten vom Rotor und oder zum Aufsetzen von Küvetten auf den Rotor während dessen Stillstand ausgestattet. Die Aufgaben der Bearbeitungsstationen werden nachfolgend im einzelnen beschrieben. Eine detaillierte Beschreibung der Bearbeitungsstationen zur Proben- oder Reagenzienzugabe ist aus der europäischen Patentanmeldung Nr. 92.105901 mit dem Titel "Bearbeitungsstation einer Analysenvorrichtung" ersichtlich. Auf diese Beschreibung wird hiermit Bezug genommen.

Eine Bearbeitungsstation 4 ist für den Einsatz neuer Küvetten und für die Entfernung gebrauchter Küvetten nach beendeter Analyse zuständig. Die aus dem Rotor entfernten Küvetten werden in einen Abfallbehälter gebracht.

Eine Bearbeitungsstation 8 ist für die Reagenziendosierung zuständig. Eine der auf dem Rotor befindlichen Küvetten wird abgenommen und in eine Bearbeitungsposition in der Station gebracht. Ein oder mehrere Reagenzien werden in die Küvette pipettiert. Gleichzeitig wird durch geeignete Küvettenbewegung die Reagenzienmenge gemischt. Danach wird die mit Reagenzien versehene Küvette auf den Rotor zurückgesetzt.

Eine Bearbeitungsstation 6 dient der Vorverdünnung der Probe. Eine leere Küvette wird vom Rotor abgenommen und in eine Bearbeitungsposition in der Station gebracht. Eine vorgegebene Probenmenge und Verdünnungsflüssigkeit werden in die Küvette pipettiert. Gleichzeitig wird die durch geeignete Küvettenbewegung die verdünnte Probe gemischt. Danach wird die Küvette auf den Rotor zurückgesetzt.

Eine Bearbeitungsstation 5 ist für die Probendosierung zuständig. Eine der auf dem Rotor befindlichen Küvetten wird abgenommen und in eine Bearbeitungsposition in der Station gebracht. Eine vorgegebene Menge der verdünnten Probe wird in die Küvette pipettiert. Gleichzeitig wird durch geeignete Küvettenbewegung die Reagenzienmenge gemischt. Danach wird die mit Proben/Reagenzien-Mischung versehene Küvette auf den Rotor zurückgesetzt.

Eine Bearbeitungsstation 7 dient der Zugabe eines Startreagens für den Beginn der Reaktion der Probe. Eine Küvette wird vom Rotor abgenommen und in eine Bearbeitungsposition in der Station gebracht. Eine vorgegebene Menge des Startreagens wird in die Küvette pipettiert. Gleichzeitig wird durch geeignete Küvettenbewegung die Proben/Reagenzien-Mischung gemischt. Danach wird die Küvette auf den Rotor zurückgesetzt.

Eine Bearbeitungsstation 11 dient zur Durchführung einer fluoreszenzpolarimetrische (FP) Messung. Eine mit Proben/Reagenzien-Mischung versehenen Probe wird vom Rotor abgenommen und in eine Messkammer in der Station gebracht. Nach der Messung wird die Küvette auf den Rotor zurückgesetzt.

Der Ablauf eines Bestimmungsprogramms stellt sich am Beispiel einer Absorptionsmessung wie folgt dar:

Für die angeforderte Bestimmung wird durch die Bearbeitungsstation 4 eine Küvette auf den Rotor aufgesetzt. Auf dem Rotor wird mit dieser Küvette als erstes eine Luftmessung zur Prüfung der Küvette durchgeführt.

30 Sekunden später wird die Küvette durch die Bearbeitungsstation 8 vom Rotor abgenommen und in eine Pipettierposition in der Bearbeitungsstation gebracht. Hier werden ein oder mehrere Reagenzien in die Küvette pipettiert. Im Fall von mehreren Reagenzien wird gleichzeitig mit der Pipettierung und danach gemischt. Anschliessend wird die Küvette auf den Rotor zurückgesetzt.

72 Sekunden später wird die Küvette durch die Bearbeitungsstation 6 vom Rotor abgenommen und in die Pipettierposition gebracht. Hier wird die Probe und ein Verdünnungsmittel durch den Probentransfer dosiert. Gleichzeitig und/oder danach wird gemischt und nach Verwendung der vorverdünnten Probe wird die Küvette auf den Rotor zurückgesetzt.

6 Sekunden später wird die Küvette durch die Bearbeitungsstation 5 vom Rotor abgenommen und in die Pipettierposition gebracht. Hier wird die Probe durch den Probentransfer dosiert, danach gemischt und die Küvette auf den Rotor zurückgesetzt. Anschliessend wird auf dem Rotor eine Tₒ-Messung durchgeführt.

162 Sekunden später wird die Küvette durch die Bearbeitungsstation 7 vom Rotor abgenommen und in die Pipettierposition gebracht. Hier wird ein Startreagens zudosiert, danach gemischt und die Küvette auf den Rotor zurückgesetzt.

324 Sekunden später wird die Küvette durch die Bearbeitungsstation 4 vom Rotor abgenommen und entsorgt.

Während sich die Küvetten auf dem Rotor befinden wird alle 6 Sekunden eine Absorptionsmessung durchgeführt.

Zu diesem Ablauf kommen für fluoreszenzpolarimetrische (FP) Messungen nach zwei Behandlungsphasen hinzu.

Wenn die Küvette nach der Probenzugabe auf den Rotor zurückgesetzt ist wird sie 132 Sekunden später durch die Bearbeitungsstation 11 wieder entnommen und eine FP-Leermessung (parallel und senkrecht) durchgeführt.

Entsprechend wird 90 Sekunden nachdem die Küvette mit dem zudosierten Startregens auf den Rotor zurückgesetzt ist, die Küvette erneut durch die Bearbeitungsstation 11 entnommen, gemessen und danach auf den Rotor zurückgesetzt.

Während der Pipettierzeit in den Bearbeitungsstationen führt der Rotor eine ganze Umdrehung für die Absorptionsmessung aus. Das Photometer durchstrahlt die Küvetten mit weissem Licht, das anschliessend in zwölf Wellenlängen aufgetrennt wird. Zwei beliebige Werte dieser zwölf Wellenlängen werden für die weitere Verarbeitung gespeichert. Dadurch ergibt sich für jede Küvette alle 6s ein Messpunkt mit zwei Wellenlängen.

## Patentansprüche

1. Vorrichtung zur Durchführung von chemischen und biochemischen Analysen mit
- einem Transportrotor (2) zum Transport von Probenküvetten, die am äusseren Rand (3) des Rotors angeordnet sind, zu Bearbeitungsstationen, die zur Vornahme der für die Analysen erforderlichen Behandlungsschritte in definierten Positionen um den Rotor herum angeordnet sind,
- einer ersten Station (5) für die Probendosierung,
- einer zweiten Station (8) für die Reagenziendosierung,
- einer dritten Station (11) für die Vornahme einer fluoreszenzpolarimetrischen oder Absorptions-Messung, und ggf. weiterer Stationen (4,6,7),
dadurch gekennzeichnet,
dass bei den Stationen Entnahmemittel
- zur Entfernung der Küvetten vom Rotor (2),
- zur Verbringung der Küvetten in die Bearbeitungsstationen
- und zum Zurücksetzen der Küvetten nach einer Bearbeitung auf den Transportrotor (2) vorhanden sind
und dass der Transportrotor (2) mit einem Antrieb zur Drehung um genaue Winkelschritte in beide Drehrichtungen versehen ist.

2. Vorrichtung nach Anspruch 1, dadurch gekennzeichnet, dass die Entnahmemittel jeweils Teil der Bearbeitungsstationen sind.

## Claims

1. A device for performing chemical and biochemical analyses, having
- a conveying rotor for conveying sample cuvettes positioned at the outer periphery of the rotor to processing stations which for performing the processing steps necessary for the analysis are arranged around the rotor at defined positions
- a first station for the metering of samples
- a second station for the metering of reagents
- a third station for performing a fluorescence-polarimetric or absorption measurement and possibly further stations,
characterized in that at the stations there are removing means for removing the cuvettes from the rotor, for transferring the cuvettes into the processing stations and for returning the cuvettes to the conveying rotor after processing and that the conveying rotor is provided with a drive for rotation by exact angular steps in both rotary directions.

2. A device according to claim 1, characterized in that the removing means each are part of the processing stations.

## Revendications

1. Dispositif de réalisation d'analyses chimiques et biologiques comportant:
un rotor de transport (2) pour transporter des cuvettes d'échantillons, qui sont agencées au bord extérieur (3) du rotor, vers des stations de traitement qui sont agencées à des positions définies autour du rotor de manière à mettre en oeuvre les étapes de manipulation nécessaires pour les analyses,
une première station (5) pour doser les échantillons,
une deuxième station (8) pour doser les réactifs;
une troisième station (11) pour mettre en oeuvre une mesure par polarimétrie en fluorescence ou par absorption, et éventuellement d'autres stations (4, 6, 7),
caractérisé en ce que
des moyens de prélèvement destinés
- à éloigner du rotor (2) les cuvettes,
- à amener les cuvettes dans les stations de traitement,
- et à remettre les cuvettes sur le rotor de transport (2) après un traitement
sont agencés près des stations
et en ce que le rotor de transport (2) est pourvu d'un entraînement à rotation, à pas angulaires précis dans les deux sens de rotation.

2. Dispositif selon la revendication 1, caractérisé en ce que les moyens de prélèvement sont respectivement partie des stations de traitement.
